# EUROPEAN PATENT SPECIFICATION

(11) **EP 1 998 970 B1**
(45) Date of publication and mention of the grant of the patent: **20.01.2010**
(21) Application number: 07750262.3
(22) Date of filing: 08.02.2007
(51) Int. Cl.: B60J 5/04

(54) **DOOR ASSEMBLY WITH CORE MODULE HAVING INTEGRATED BELT LINE REINFORCEMENT**
TÜRANORDNUNG MIT KERNMODUL MIT INTEGRIERTER GÜRTELLINIENVERSTÄRKUNG
ENSEMBLE PORTE POURVU D'UN MODULE CENTRAL POSSEDANT UN RENFORT DE LIGNE DE CEINTURE INTEGRE

(30) Priority: 23.03.2006 US 785043 P
(43) Date of publication of application: 10.12.2008
(73) Proprietor: ExxonMobil Chemical Patents Inc., Baytown, TX 77520-2101 (US)
(72) Inventor: FLENDRIG, Joseph, Gustaaf Marie, B-1060 Brussels (BE); VALENTAGE, Jeffrey, Katy, Texas 77494 (US)
(74) Representative: Gerstberger, Gisela
(86) International application number: PCT/US2007/003409
(87) International publication number: WO 2007/111782

(56) References cited:
- EP-A- 1 120 305
- DE-A1- 10 031 850
- DE-A1- 19 727 010
- FR-A- 2 743 028
- FR-A- 2 743 029
- US-A- 4 796 946
- US-A- 4 945 682
- US-A- 6 112 470

## Description

### BACKGROUND OF THE INVENTION

### Field of the Invention

This invention relates to door systems. More particularly, embodiments of the present invention relate to door systems for vehicles, such as automobiles, specifically cars and trucks.

### Description of the Related Art

Conventional doors for automobiles contain many individual pieces that are assembled to a frame or shell. Automotive doors can have more than fifty to greater than one hundred individual components or parts depending on the vehicle and option package. Such components can include various hardware, electrical components, and seals. Illustrative hardware components can include handles, mirrors, window regulators, window tracks, windows, door locks, and impact bolsters. Certain electrical components can include wire harnesses, speakers, window motors, and outside mirror motors. Illustrative sealing components include glass run channels, beltline seals, lower sash seals, plugs, grommets, and body to door seals.

Each component is typically supplied by a different vendor or supplier, some of which are known in the industry as Tier 1, Tier 2, and Tier 3 suppliers. In most cases, an original equipment manufacturer (OEM) produces a door frame and exterior skin that are typically stamped separately from cold rolled steel, welded together, and painted to provide a door shell. The frame and skin can possibly be stamped from one blank to form the door shell. The numerous individual components from the Tier 1, 2, and 3 suppliers are then assembled onto the OEM's door shell, typically at the OEM's assembly line.

The process of affixing the components to the door shell is intensive and requires costly logistical considerations and/or systems to assure the right parts are at the right place at the right time. The assembly process can also demand a large amount of costly floor space. Each component is attached to the door shell using at least one of many different means including clips, screws, fittings, adhesives, just to name a few. In most cases, twenty to forty five different assembly steps are needed to complete the entire assembly process of the door.

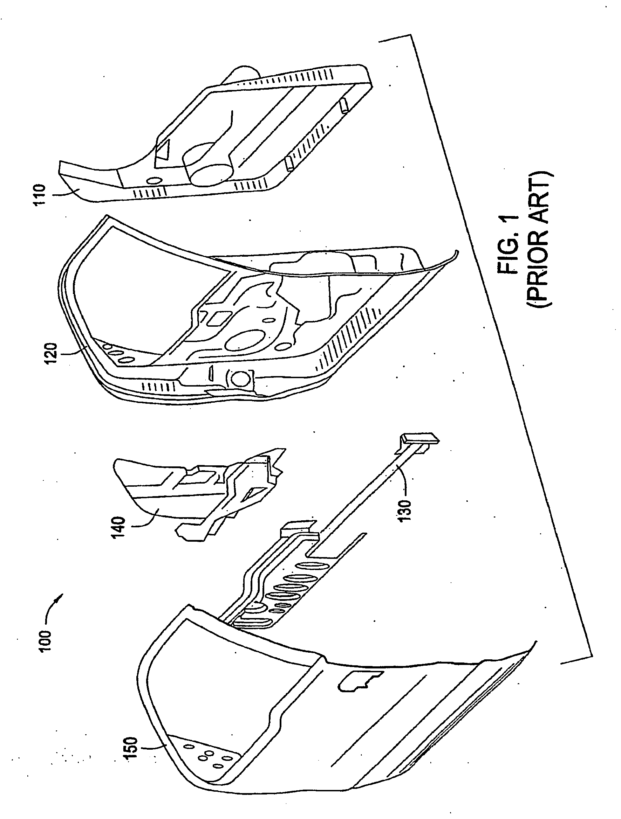

Figure 1 shows a schematic illustration of a conventional door 100. Typically, the door 100 has an interior trim panel 110, inner panel 120, intrusion beam 130, reinforcement section 140, and outer panel 150. Typically, the inner panel 120, intrusion beam 130, reinforcement section 140, and outer panel 150 are each formed from steel, stamped, welded together, and painted at the OEM. The numerous hardware, electrical and sealing components such as those listed above (not shown in Figure 1 for simplicity) are typically assembled onto the steel inner panel 120 at the OEM. Similarly, the various components on the interior trim panel 110, including lights, switches, armrests, map pockets, handles, etc., (also not shown for simplicity) are assembled at a Tier supplier and shipped to the OEM. The OEM attaches the assembled trim panel 110 to the assembled inner panel 120, and the final electrical and hardware connections are made.

Accordingly, the door manufacturing process is intensive and time consuming. The assembly process also requires a high degree of logistical planning to ensure all the parts are available and assembled in the correct manner and order. Other incidental and related costs include ordering, storage, management, transportation, functionality testing, quality control, in addition to the floor space to assemble the various components. All those factors add up to a costly end product.

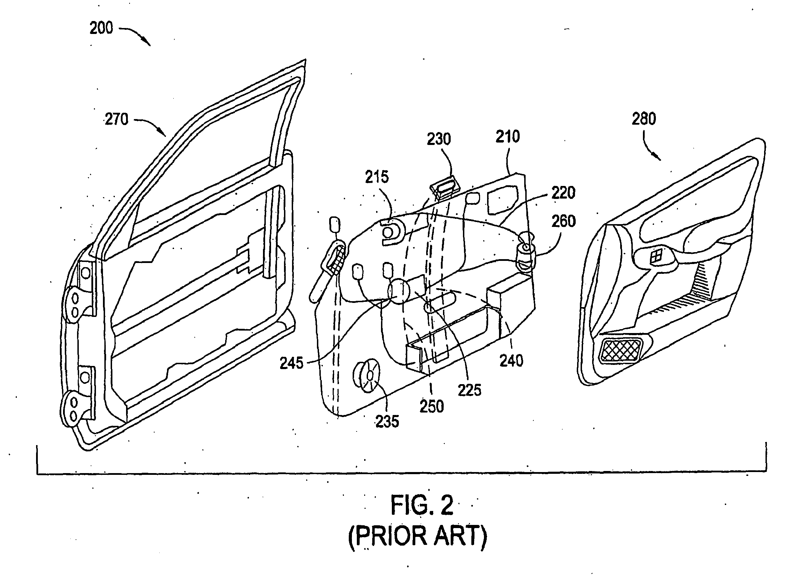

Cost savings and part consolidation ideas have tried using pre-assembled mounting panels with all or part of the hardware and electrical components assembled thereon as shown in Figure 2. Figure 2 shows a schematic illustration of a conventional door 200 having a pre-assembled mounting panel 210. Numerous components are assembled to the mounting panel 210, including an interior door handle 215, handle linking cables 220, window motor 225, window regulator 230, speaker 235, window guide rail 240, drum pulley 245, cable 250, and door lock unit 260.

All or part of the hardware and electrical components can be installed onto the mounting panel 210 at an outside supplier, such as a Tier 1 supplier. The mounting panel 210 is typically made from stamped steel, thermoformed glass mat reinforced thermoplastic (GMT), or injection molded long glass fiber reinforced polypropylene. Once the applicable components are assembled onto the mounting panel 210 at the outside supplier, the assembled mounting panel 210 is transported to the OEM for installation on a door panel sub-assembly or outer panel 270. An interior trim panel 280 is then attached to the outer panel 270. Other part consolidation ideas are described in U.S. Patent Nos. 6,857,688; 6,640,500; 6,546,674; 6,449,907; 5,820,191; 5,355,629; 5,040,335; 4,882,842; 4,648,208; and WO 01/25055 A1. A door core module according to the preamble of claim 1 is known from US-A-6112 470.

Several examples of pre-assembled mounting panels are believed to be in production. However, the number of components and the required assembly time of the door is substantially the same. The cost benefits to the OEM are mainly due to logistical costs absorbed by the Tier suppliers.

There is a need, therefore, for a door assembly having fewer individual components. There is also a need for a door assembly that minimizes the number of individual components requiring assembly.

### SUMMARY OF THE INVENTION

A door core module is provided. In at least one specific embodiment, the door core module includes a body having a first and second side, a reinforcement member disposed on the first side of the body, and a glass run channel disposed on the second side of the body. The glass run channel includes an open profile and the body includes one or more components disposed thereon.

A door system is also provided. In at least one specific embodiment, the door system includes an outer panel and a core module. The core module includes a body having a first and second side, a reinforcement member disposed on the first side of the body, and a glass run channel disposed on the second side of the body. The glass run channel preferably has an open profile, and the body includes one or more components disposed thereon. The door system further includes a trim panel adapted to cover the core module.

Furthermore, a method for assembling a door system is provided. In at least one specific embodiment, the method includes providing at least one outer panel, at least one core module, and at least one trim panel. A reinforcement member is disposed on an interior side of the core module. A glass run channel is disposed on an exterior side of the core module, and a glass run channel is disposed on the outer panel. Further, a window glass is disposed on the core module, and the core module is disposed on the outer panel. Finally, the trim panel is attached.

### BRIEF DESCRIPTION OF THE DRAWINGS

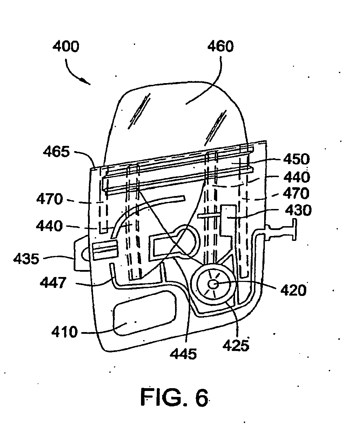

The invention is shown in Figure 6 only.

Figure 1 is a schematic illustration of a conventional door as used in the prior art.

Figure 2 is a schematic illustration of a conventional door having a pre-assembled mounting panel as used in the prior art.

Figure 3 is a schematic view of one illustrative embodiment of an integrated door system.

Figure 4 is a schematic view of one illustrative embodiment of a door structure.

Figures 5A and 5B show a schematic view of an illustrative glass run channel in accordance with one or more embodiments described.

Figure 6 is a schematic view of an illustrative core module in accordance with one or more embodiments described.

Figure 7 is a schematic view of an illustrative reinforcement member in accordance with one or more embodiments described.

Figure 8A is a schematic plan view of the reinforcement member shown in Figure 7 having a cover plate attached thereto.

Figure 8B is a cross sectional view of an illustrative reinforcement member having one or more clips to secure a cover plate thereon.

Figure 8C is a cross sectional view of an illustrative reinforcement member having a profiled edge or protrusion formed thereon.

Figure 9A is a schematic view of an illustrative reinforcement member having one or more stiffening structures disposed thereon.

Figure 9B and Figure 9C show various design patterns of the one or more stiffening structures shown in Figure 9A.

Figures 10A, 10B and 10C each show illustrative plan views of a reinforcement member having an insert disposed therein.

Figure 11A is a partial cross section view of an illustrative reinforcement member having one or more clips disposed thereon for engaging and holding a cover plate in accordance with one or more embodiments described.

Figure 11B is a schematic view of an illustrative cover plate having one or more clips formed thereon for securing to a reinforcement member in accordance with one or more embodiments described.

Figure 12 is a schematic view of one embodiment of a window lift system in accordance with one or more embodiments described.

Figure 13 is a schematic, partial cross section of a motor housing shown in Figure 12.

Figure 14 is a schematic, partial cross section of a window track shown in Figure 12.

Figure 15 is a schematic view of another embodiment of a window lift system in accordance with one or more embodiments described.

Figure 16 is a schematic, partial cross section of a motor housing shown in Figure 15.

Figure 17 is a schematic, partial cross section of a window track shown in Figure 15.

Figure 18 is a schematic plan view of an illustrative trim panel in accordance with one or more embodiments described.

Figures 19A-E show a simplified, schematic of an assembly sequence in accordance with one or more embodiments described.

Figure 20 is a schematic side view of one embodiment of an illustrative lock assembly having a sliding mechanism for assembly.

Figure 21 is a schematic side view of the sliding mechanism shown in Figure 20.

Figure 22 is a partial cross sectional view of the sliding mechanism shown in Figure 21 along lines A-A.

Figure 23 is a schematic side view of another embodiment of an illustrative lock assembly having a sliding mechanism for assembly.

Figure 24 is a schematic side view of the sliding mechanism shown in Figure 23.

Figure 25 is a partial cross sectional view of the sliding mechanism shown in Figure 24 along lines A-A.

### DETAILED DESCRIPTION OF THE INVENTION

In one or more embodiments, a door system having a door structure, core module and trim panel is provided. The core module includes a reinforcement section that is typically found on a conventional door structure, such as the door described with reference to Figures 1 and 2. The absence of a conventional reinforcement section on the door structure allows easy access to the window lift system and window glass of the door system.

The reinforcement section of the core module includes a reinforcement member that adds strength to the door system. Preferably, the reinforcement member has a length longer than the width and thickness thereof resembling a bar or plate, and is located proximate or adjacent to the beltline of the door. The reinforcement member can be fabricated from a separate component and assembled onto the core module or the reinforcement member can be insert-molded with the core module. In one or more embodiments, the reinforcement member and the core module are made from the same material or the same combination of materials. In one or more embodiments, the reinforcement member and the core module are made from different materials or a different combination of materials. Preferably, the reinforcement member is injection molded in a two component process ("2K process") with the core module. Suitable materials for the reinforcement member and core module are discussed in more detail below.

In one or more embodiments above or elsewhere herein, a door system having a sealing system with a first portion thereof at least partially disposed on the door structure and a second portion thereof at least partially disposed on the core module is also provided. The sealing system can have a multitude of profiles (i.e., cross sections) including "U" shaped and "L" shaped cross sections, either alone in combination with one or more lips, bulbs, or other sealing elements. The sealing system can be made from one or more different materials with different properties including metal or plastic wire reinforcement. In one or more embodiments, the seal system includes a combination of "U" shaped and "L" shaped cross sections. In particular, the first portion of the seal system on the door structure can have a combination of "U" shaped and "L" shaped cross sections. Preferably, where the seal system has a "L" shaped cross section, an adjacent portion on the core module (i.e., the "second portion") has a corresponding cross section such that when the core module is attached to the door structure, the two portions of the seal system enclose the glass on both sides. As used herein the term "door" is intended to include any door. For example, the term "door" can refer to one or more passenger doors, whether hinged, sliding, lifting or with any other alternative opening/closing movement, lift gates, tail gates, and hatchbacks for any vehicle including cars, trucks, SUVs, trains, boats, airplanes, etc., whether for personal, recreational or commercial use.

The placement of the reinforcement section and the seal system allows for easy installation and assembly of the door system. In particular, the placement of the reinforcement section and the seal system provides easy access to the numerous components of the door including the window and window lift system. Such placement also allows the working components, most notably the window lift system, of the door to be functionality tested before final installation of the door to the vehicle. As such, logistic concerns are greatly reduced.

Furthermore, the door system provided reduces the number of individual components (i.e., parts) and assembly steps required to produce the finished door. The integration of the reinforcement section alone makes part assembly easier, reduces weight of the door and allows functionality testing of the various assembled components and parts.

Preferably, the door system utilizes multi-material injection molding technology to integrate the various components. Multi-material injection molding techniques allow two or more materials to be injection molded into a single or multiple cavity mold. A two component or material process is commonly known as "2K" and a three material process is commonly known as "3K." Any suitable multi-material injection molding machine can be used, such as an Engel Victory Combi machine available from Engel Corp. Additional in-mold processing techniques can also be used to enhance and/or facilitate the integration. Illustrative in-mold processing techniques include, but are not limited to, multiple cavity tools, insert molding, movable core sections, and gas/water assist. Robotic extrusion can also be used alone or in combination with any of these processing techniques. Robotic extrusion is particularly useful for applying the sealing members into the injection mold.

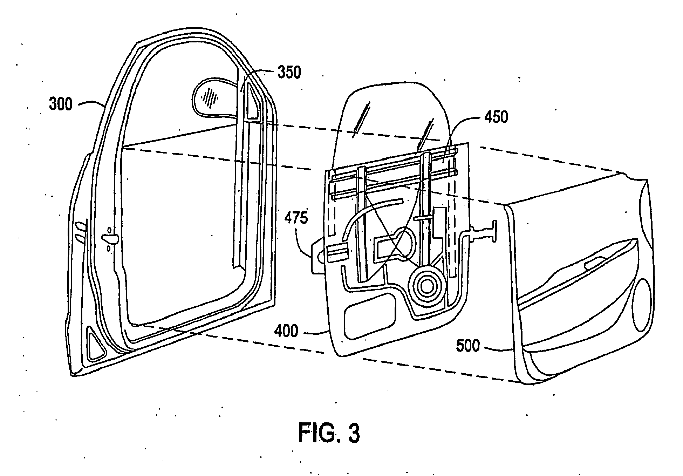

Figure 3 shows a schematic view of an illustrative door system according to one or more embodiments herein. In at least one specific embodiment, the door system includes a door structure 300, glass run channel 350, core module 400, reinforcement member 450, latch assembly 475, and trim panel 700. The glass run channel 350 is preferably assembled on the door structure 300. The reinforcement member 450 and the latch assembly 475 are preferably assembled on or integrated in the core module 400. As explained in more detail below, the core module 400 can include one or more hardware components, electrical components and sealing components attached to or otherwise assembled thereon. In one preferred embodiment, the core module 400 is attached to the door structure 300 and the trim panel 700 is then attached to either the core module 400 or the door structure 300 to complete the door system although any sequence can be used.

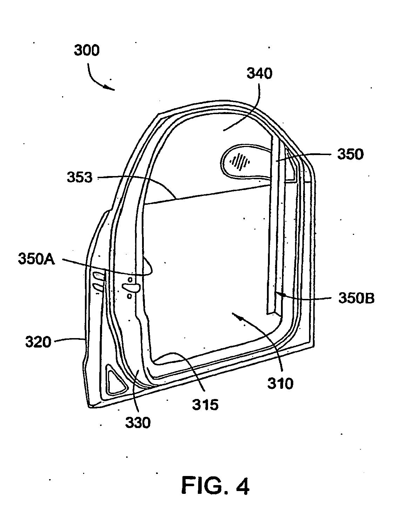

Figure 4 shows a schematic plan view of one embodiment of an illustrative door structure 300. The door structure 300 has a first side or interior side 310 that faces the core module 400 and ultimately the passenger compartment of the vehicle. The interior side 310 of the door structure 300 can include a recessed cavity 315 that is sized and shaped to resemble the dimensions of the core module 400 such that when assembled, at least a portion of the core module 400 fits into the recessed cavity 315 of the door structure 300.

In one or more embodiments, the core module 400 includes a perimeter seal (not shown in this view) that can be integrally formed therewith or attached separately. That seal creates a wet/dry barrier between the door structure 300 and the core module 400, helps to create a rattle free assembly, helps to reduce noise transmission, and helps compensate for thermal expansion. The door structure 300 also has a second side or exterior side (not shown in this view) to which a side mirror and external door handle (also not shown in this view) can be attached. As used herein, the term "interior" refers to an orientation or direction facing toward the passenger compartment or inside of the vehicle, and the term "exterior" refers to an orientation or direction facing away from the passenger compartment or inside of the vehicle.

In one or more embodiments above or elsewhere herein, the door structure 300 does not have a reinforcement structure or member located at or near the beltline 353. The absence of a reinforcement structure or member allows greater access to the window glass and other components that require assembly or repair. In particular, the absence of such an obstruction at the beltline 353 facilitates the window glass assembly and disassembly, as explained in more detail below. The absence of a reinforcement structure or member also reduces the overall weight of the door assembly, which leads to lighter vehicles and better gas mileage.

The door structure 300 can be fabricated from one or more separate panels. For example, the door structure 300 can include an outer skin 320 and an inner support 330 affixed to one another. Each of the outer skin 320 and the inner support 330 can be injection molded from polyethylene, polypropylene and more preferably from a reinforced polypropylene. In certain embodiments, each of the outer skin 320 and the inner support 330 can be injection molded, cast, extruded, molded or formed in any other way from one or more other suitable materials, including polyethylene, polypropylene, and/or any one or more materials described herein. In one or more embodiments, each of the outer skin 320 and the inner support 330, can be stamped from aluminum or cold, rolled steel, assembled, and painted to meet the specifications of the OEM. In one or more embodiments, each of the outer skin 320 and the inner support 330 can be made from different types of steel (i.e., "tailored blanks"), welded together stamped and painted as desired. Furthermore, the door structure 300 can be a single component or single panel.

Still referring to Figure 4, the door structure 300 has an upper portion thereof that has an opening 340 for the window glass (not shown). Within the opening 340, the door structure 300 includes a seal or glass run channel 350 for mating engagement with the window glass when assembled. At least a portion of the glass run channel 350 extends into the cavity 315 of the door structure 300 as shown. In one embodiment, a first portion 350A of the glass run channel 350 is attached to the door structure 300 below the belt line 353 of the door structure 300, and a second portion 350B thereof is attached at a lower end of the door structure 300, as shown in Figure 4. Preferably, at least one of the first and second portions 350A, 350B of the glass run channel 350 has enough length to contact the window glass when the window glass is in a lowered position. More preferably, both the first and second portions 350A, 350B of the glass run channel 350 have a sufficient length to contact the window glass when the window glass is in a lowered position.

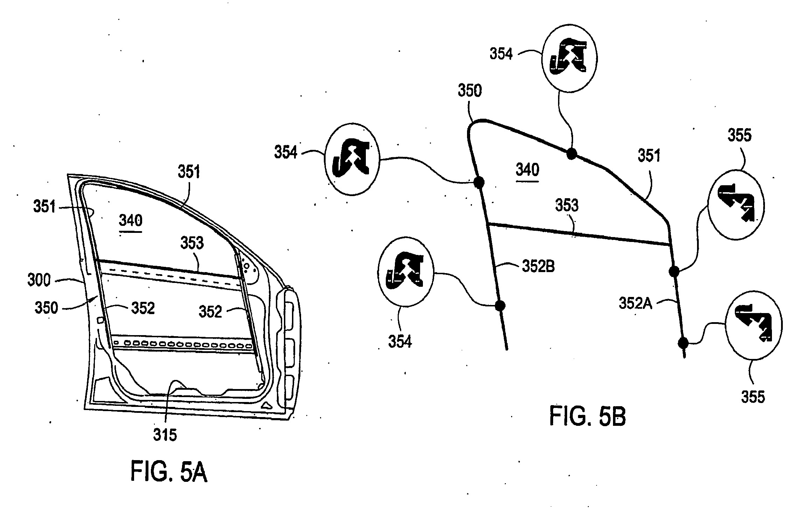

The glass run channel 350 can be made from one or more separate sections or members that are fitted, welded, or otherwise attached together or kept in a fixed orientation relative to each other. Preferably, the glass run channel 350 is made from a single member. In one or more embodiments, the glass run channel 350 has one or more cross sections (i.e., profiles) adapted to contact the window glass. Illustrative profiles include "U" shaped, "L" shaped, and combinations thereof. The glass run channel 350 is described in more detail below with reference to Figures 5A and 5B

Figure 5A shows a schematic view of an illustrative glass run channel 350 disposed within the door structure 300. Figure 5B shows various enlarged, cross sectional views of the illustrative glass run channel 350. In one or more embodiments, the glass run channel 350 has an upper portion 351 disposed within the opening 340 of the door structure 300 and one or more lower portions 352 disposed within the cavity 315. The upper portion 351 is located above the beltline 353, and the lower portion 352 is located below the beltline 353. The upper portion 351 of the glass run channel 350 preferably has a "U" shaped profile 354 (shown in Figure 5B) that can surround the outer edge of the window glass (not shown). The lower portion 352 of the glass run channel 350 can have "U" shaped profiles 354, "L" shaped profiles 355, or any combinations thereof as shown in Figure 5B.

Referring to Figure 5B, the A pillar side of the lower portion 352A preferably has an "L" shaped profile such as profile 355 and the B pillar side of the lower portion 352B preferably has a "U" shaped profile such as profile 354. The "L" shaped profile 355 contacts the outer (i.e., exterior) perimeter of the window glass. As will be explained in more detail below, the core module 400 can include a complementary shaped profile to contact the inner (i.e., interior) perimeter of the window glass so that the two profiles guide the window glass when assembled.

The "L" shaped profile 355 of the glass run channel 350 adjacent the A pillar makes assembly and removal of the window glass much easier since the glass does not have to be manipulated within a partially closed channel like the "U" shaped profiles 354. The lower portion 352B of the glass run channel 350 at the B pillar side can also have a "L" shaped profile 355 although this configuration is not necessary to facilitate installation and removal of the window glass. All that is needed to ease installation and removal of the window glass is one side or the other (i.e., the A pillar side or B pillar side) of the lower portions 352A, 352B to be opened (i.e., "L" shaped). The opened profile allows insertion of the window glass with little manipulation and without special tools. Once inserted, the window glass can be raised or lifted into the "U" shaped profile 354 of the upper section 351 of the glass run channel 350.

Considering the core module 400 in more detail, Figure 6 is a schematic view of one embodiment of the core module 400. As mentioned above, the core module 400 includes one or more hardware components, electrical components and sealing members (i.e., "seals"). In one or more embodiments, the core module 400 includes a reinforcement section 450. The reinforcement section 450 adds strength and stiffness to the core module 400 and the overall door system when assembled. As discussed above, conventional doors have a reinforcement bar attached onto the door frame. In the embodiment shown in Figure 6, the core module 400 and the reinforcement section 450 can be integrally formed thereby reducing the number of components of the door and/or assembled to the core module 400 to facilitate installation and functionality testing of the door assembly, especially the window lift system. The reinforcement section 450 can be disposed on either the interior side ("first side") of the core module 400 or the exterior side ("second side") of the core module 400, although shown on the interior side of the core module 400 in Figure 6.

Illustrative components assembled to the core module 400 include, but are not limited to window regulators; motors; tracks; impact bolsters; wire harnesses; speaker boxes or receptacles; speakers; window motors; outside mirror motors; beltline seals; plugs; grommets; and core to frame seals. For simplicity and ease of illustration, however, the core module 400 is shown in Figure 6 having one or more bolsters or crash pads 410, speaker boxes 425, window tracks 440, motor supports 445, window glass 460, belt line seals 465, and glass run channels 470. It is to be understood that the core module 400 can include any other component typical of an automotive door. For example, the core module 400 can include one or more speakers 420, door control units 430, door locks 435, and cable locks 447. The core module 400 can also include one or more air distribution channels for heating or air (not shown).

Preferably, those components are injection molded on the core module 400. For example, the one or more bolsters 410, speaker boxes 425, window tracks 440, motor support 445, reinforcement section 450, belt line seal 465, glass run channels 470, and air distribution channels (not shown) can be integrally formed with the core module 400 using multi-material or multi-shot injection molding techniques as discussed. As such, assembly time is greatly reduced since the components are an integral part of the core module 400, and not a separate component requiring costly assembly.

Considering the one or more glass run channels 470 in more detail, the glass run channel 470 is preferably 2K molded on the second side of the core module 400 using a multi-material injection molding machine. In other words, the one or more glass run channels 470 are integrally formed with the core module 400. The second material is preferably a flocked or slip coated to reduce friction with the window glass or the surface friction of the second material can be low enough to allow the glass to slide along it with acceptable force. Alternatively, the glass run channel 470 can be a separate member attached or otherwise assembled onto the core module 400.

Preferably, the glass run channels 470 are formed on the exterior side of the core module 400 and therefore shown in dashed lines in Figure 6. The glass run channel 470 can have one or more profiles, such as "U" shaped, "L" shaped, or any combinations thereof, either alone in combination with one or more lips, bulbs, or other sealing elements. As mentioned, the glass run channel 470 preferably has a shaped profile or at least one lip to match the "L" shaped profile of the lower portion 350A of the glass run channel 350 on the door structure 300, as shown in Figures 5A and 5B. As such, when the core module 400 is attached to the door structure 300, the mating profiles of the glass run channels 350 and 470 provide a shaped guide for the window glass 460 to travel.

Still referring to Figure 6, the one or more crash pads or side bolsters 410 can be foamed members, such as foam blocks. The side bolsters 410 can also be hollow structures. Preferably, the bolsters 410 are injection molded using a stiff material. The bolsters 410 can be injection molded of the same material as the core module 400 or the bolsters 410 can be second shot molded onto the core module 400 using multi injection molding techniques.

Still referring to Figure 6, the one or more window tracks 440 are preferably located on the second side of the core module 400 with the glass run channels 470. As mentioned above, the one or more window tracks 440 can be integrated with the core module 400. Preferably, the window tracks 440 are injection molded on the core module 400. A slip coating (not shown in this view) can be inserted into the mold where the window tracks 440 are formed to reduce friction with the window glass. This can be done using the 2K or multi-material injection techniques or robotic extrusion. Alternatively, the slip coat can be inserted in the tool before the tracks 440 are molded. This can be done, for example, as a coating on a thin polymeric film. Alternatively a thin polymeric film with a flock coating can be inserted into the tool and overmolded. The slip coating is preferably made of a material that can reduce friction between the window tracks 440 and the window glass. The slip coating can be made of polyethylene, polypropylene or other suitable materials, including the materials discussed herein. If the coefficient of friction of the base material from which the seal is made is low enough, it is no longer necessary to add a low friction surface to the seal.

The belt line reinforcement integration and the integration of the glass run channel 470 onto the core module 400 can allow the complete pre-installation of the window lift system including the window glass 460. As such, the window mechanism and controls can be tested at the Tier 1 supplier of the assembler of the core module 400, thereby reducing the time and costs of the OEM's assembly.

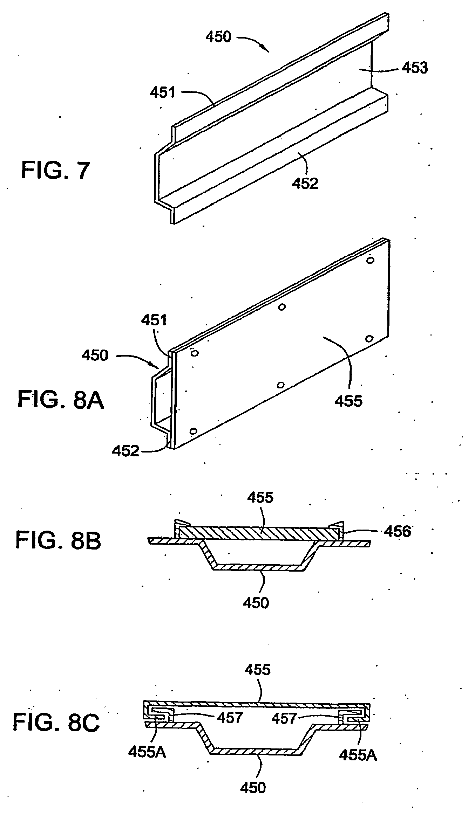

Considering the reinforcement member 450 in more detail, Figures 7-11 illustrate various embodiments of one or more illustrative reinforcement members 450. The reinforcement members 450 can be stamped from steel or aluminum, or fabricated from one or more non-metallic materials such as polypropylene or one or more engineering resins discussed below. In one or more embodiments, the reinforcement members 450 are fabricated from a separate component and assembled onto the core module 400. In one or more embodiments, the reinforcement members 450 are insert-molded with the core module 400. For example, the reinforcement members 450 can be stamped from aluminum, steel, or other suitable metal or alloy, and inserted into the injection molding tool and at least partially over-molded with the core module 400 material.

Figure 7 is a schematic view of an illustrative reinforcement member 450 that can be used. The reinforcement member 450 can include a top flange 451 and a bottom flange 452 for assembly to the core module 400 (not shown in this view). Also not shown in this view, each flange 451, 452 can include one or more apertures to receive one or more fastening member, such as a clip, screw, bolt, rivet, etc. In one or more embodiments, the reinforcement member 450 can include a recessed section 453 located between the flanges 451, 452, as shown in Figure 7. The recessed section 453 can have any depth whether constant or variable. The depth helps provide stiffness (i.e., resistance against deformation).

In one or more embodiments above or elsewhere herein, the reinforcement member 450 can include a cover plate 455 disposed thereon to provide added strength and stiffness, as shown in Figure 8A. Figure 8A shows a schematic plan view of the reinforcement member 450 having the cover plate 455 attached thereto. The cover plate 455 is preferably secured to the reinforcement member 450 at the top and bottom flanges 451, 452. The cover plate 455 can be attached to the reinforcement member 450 using adhesion or any mechanical fastener including, for example, screws, bolts, rivets, clips, etc. The cover plate 455 can also be spot welded to the reinforcement member 450.

In one or more embodiments above or elsewhere herein, the cover plate 455 can be attached to the reinforcement member 450 using one or more clips 456 as shown in Figure 8B. Figure 8B shows a schematic cross sectional view of the reinforcement member 450 with one or more clips 456 to hold the cover plate 455 thereon. Preferably, the one or more clips 456 are injection molded or integrally formed with the reinforcement member 450 although the one or more clips 456 can be easily attached during assembly.

In one or more embodiments above or elsewhere herein, the cover plate 455 can slide onto the reinforcement member 450. For example, the cover plate 455 can include a profiled edge adapted to slide across a mating profiled edge of the reinforcement member 450, as shown in Figure 8C. Figure 8C shows a partial cross section of the reinforcement member 450 and cover plate 455 having profiled edges adapted to engage and slide thereabout. The profiled protrusion 457 of the reinforcement member 450 engages the profiled edge 455A of the cover plate 455, serving as a rail or guide for which the cover plate 455 can slide. Preferably, the clearance between the profiled edge 455A of the cover plate 455 and the profiled protrusion 457 of the reinforcement member 450 is just enough for the cover plate 455 to slide into place and held in place without later vibrating or rattling during use.

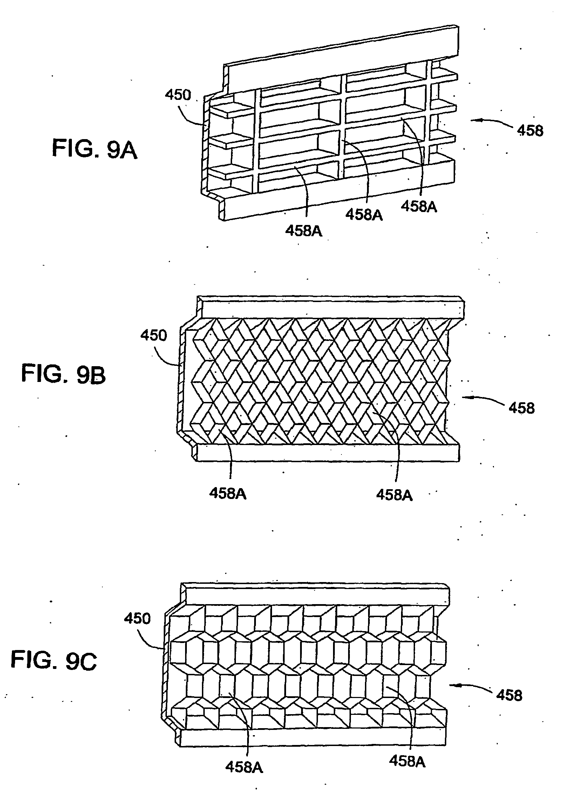

In one or more embodiments above or elsewhere herein, the reinforcement member 450 can include an insert or stiffening structure 458 disposed within the recessed section 453 as shown in Figure 9A. Figure 9A is a schematic view of an illustrative reinforcement member 450 having one or more inserts 458. Preferably, the insert 458 includes one or more fingers or ribs 458A that can be formed by over-molding a plastic structure within the recessed section 453 of the reinforcement member 450. The insert 458 increases resistance against deformation. The insert 458 can provide significantly higher energy absorption and resistance against buckling. After over-molding the insert 458, the cover plate 455 can be disposed thereon as explained above with reference to Figures 8A-C, to provide additional strength.

In one or more embodiments above or elsewhere herein, the ribs 458A of the insert 458 can be arranged in various patterns as shown in Figures 9A-9C. For example, the ribs 458A can have a rectangular pattern to resemble a checker board as shown in Figure 9A. In one or more embodiments, the ribs 458A can have a diamond-shaped pattern as shown in Figure 9B. In one or more embodiments, the ribs 458A can have a honeycomb or polygonal pattern as shown in Figure 9C. Other patterns include tubulars and circles. The desired pattern can depend on the stiffness and strength needed for the application and design considerations.

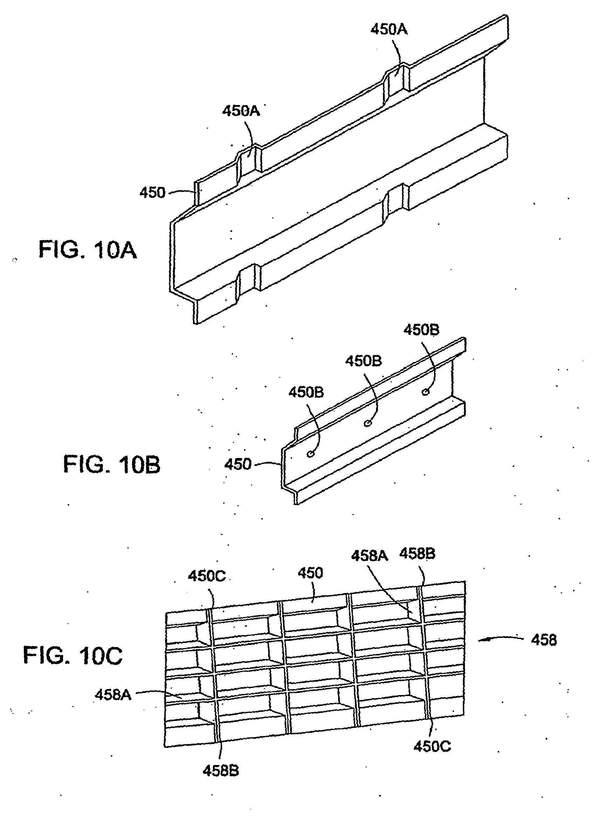

Referring to Figures 10A-10C the insert 458 can be disposed within or otherwise attached to the recessed section 453 of the reinforcement member 450 using a variety of techniques. Figures 10A-10C each show illustrative plan view of a reinforcement member 450 having various ways to hold the insert 458. For example, the reinforcement member 450 can include one or more recesses or depressions 450A to provide a location or anchor for at least a portion of the insert 458, as shown in Figure 10A. Accordingly, the insert 458 can include a mating protrusion (not shown) to fit within the depressions 450A of the reinforcement member 450, and contact the main body of the core module 400. As such, the insert 458 can be held in place during assembly. If the optional cover plate 455 is used, the insert 458 can be held in place with the depressions 450A until the cover plate 455 is secured into place.

In one or more embodiments above or elsewhere herein, one or more apertures 450B can be formed within the recessed section 453 of the reinforcement member 450, as shown in Figure 10B. During the over-molding injection process the apertures 450B allow the material of the insert 458 to flow through the reinforcement member 450. As such, the material of the insert 458 is anchored within the reinforcement member 450 and secured in place.

In one or more embodiments above or elsewhere herein, the reinforcement member 450 can include one or more slits or openings 450C to receive a protruding feature 458B of the insert 458, as shown in Figure 10C. The protruding feature 458B of the insert 458 can simply be an extension of one or more ribs 458A. The one or more slits 450C of the reinforcement member 450 can be biased or otherwise designed to provide a friction fit to hold the insert 458 in place.

In any of the embodiments described above with reference to Figures 10A-10C, the insert 458 can be held into place on the reinforcement section 450 and be ready for use. Alternatively, the insert 458 can be held into place on the reinforcement section 450 for such length of time to allow a bonding adhesive of the cover plate 455 to reach sufficient strength, thereby relying on the cover plate 455 to hold the insert 458 in place during use. Further, the embodiments described allow the insert 458 to be held into place on the reinforcement section 450 for such length of time to allow the cover plate 455 to be mechanically fastened to the reinforcement member 450 or the core module 400. Suitable mechanical fasteners include clip screws, heat stakes, rivets, blind rivets, and bolts, just to name a few. Spot welding can also be used.

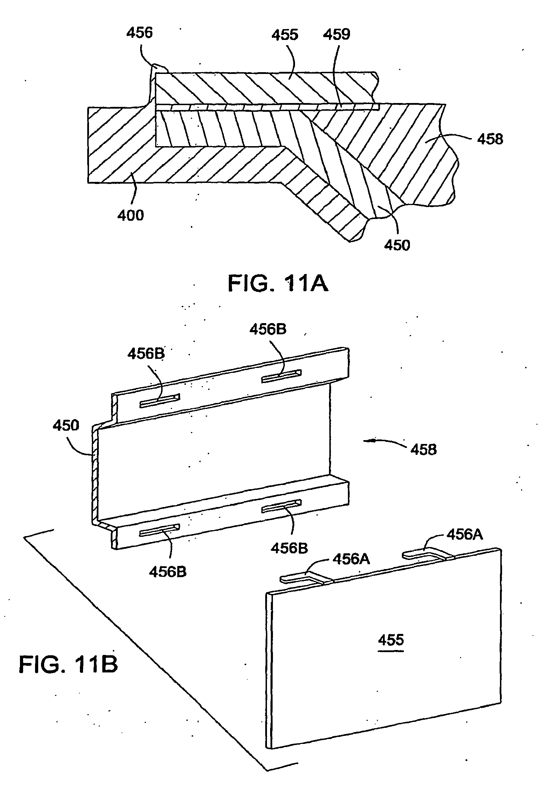

Preferably, the cover plate 455 and the reinforcement member 450 are clipped to one another. For example, Figure 11A shows a schematic view of the reinforcement member 450 having one or more clips 456 disposed thereon for engaging and holding the cover plate 455 in place. The clips 456 can be simply designed to contact the back side of the cover plate 455 thereby holding the cover plate 455. In one or more embodiments above or elsewhere herein, a layer of adhesive 459 can be used to hold the cover plate 455 in place. The clips 456, therefore, could be designed to have just enough structural integrity to hold the cover plate 455 until the adhesive (i.e., glue) layer 459 dries. An adhesive layer 459 is preferred to prevent noises due to rattling and vibration.

Figure 11B is a schematic view of an illustrative cover plate 455 having the one or more clips 456A formed thereon. The one or more clips 456A can be injection molded on the cover plate 455 or otherwise attached thereto. The clips 456A are adapted to insert into and slid within apertures 456B formed within the reinforcement member 450, thereby affixing the cover plate 455 to the reinforcement member 450. Preferably, two or more apertures 456B are formed on the upper flange 451 and two or more apertures 456B are formed on the lower flange 452 of the reinforcement member 450, as shown in Figure 11B. Other ways to fasten the cover plate 455 to the reinforcement member 450 can be easily conceived, including the use of "Christmas tree" type fasteners which are commonly used to attach the trim panel to the door structure. These fasteners can also be injection molded on the cover plate 455 to provide a higher degree of component integration and reduce assembly time.

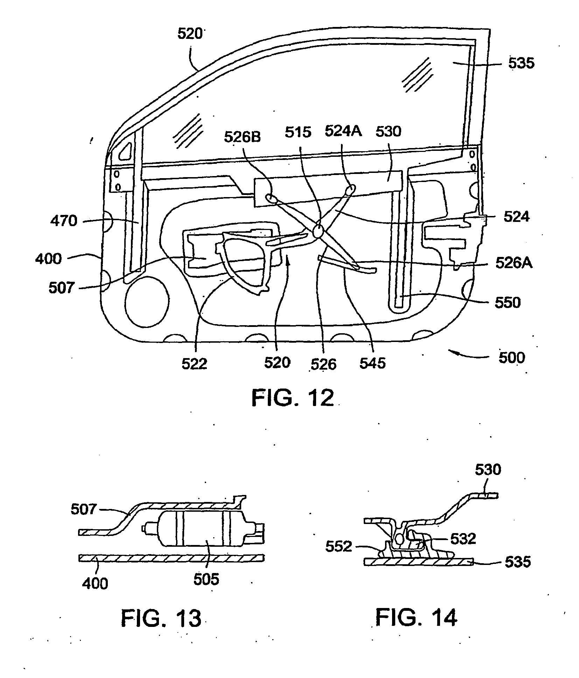

Figures 12, 13 and 14 show illustrative window lift systems 500 that can be used with the integrated the core module 400. In at least one embodiment, the window lift system 500 includes a motor housing or receptacle 507, cross arm lifter 520, regulator 530, and window tracks 545, 550. The cross arm lifter 520 includes a gear or toothed member 522, a first extension member 524, and a second extension member 526. The motor housing or receptacle 507 is preferably injection molded on the core module 400.

A lift motor 505 can be attached to the core module 400 as shown in Figure 13 either on the interior or the exterior side of the core module 400. Preferably, the motor 505 is assembled onto the housing 507. For example, the motor 505 can be easily mounted on or assembled to the integrally formed motor housing 507 using a snap connection, rivet, adhesive, screw, or by any other fastener for connecting components (not shown).

Referring again to Figure 12, the motor 505 drives the toothed member 522 about a pivot point 515 in either a clockwise or counterclockwise direction. The toothed member 522 is attached to or is integral with the first extension member 524. The first extension member 524 has a first end 524A that is attached to the regulator 530. The regulator 530 is attached to the bottom of the window glass 535. At least a portion of the regulator 530 is configured to fit within the integrally formed track 550. The track 550 is integrally formed with the core module 400 via injection molding using one or more of mono material molding, 2-K molding, in-mould labeling, and insert molding techniques, as explained above. The regulator 530 and the window track 550 can each be formed to have mating profiles 532, 552 that when engaged, the regulator 530 is guided along the profile 552 of the track 550 as shown in Figure 14.

The first extension member 524 is pivotally connected at pivot point 515 to the second extension member 526. A first end 526A of the second extension member 526 communicates with the track 545. A second end 526B of the second extension member 526 is attached to the regulator 530. The track 545 can be integrally formed with the core module 400 via injection molding or the track 545 can be a separate part, such as a rail like member that is attached to the core module 400 or insert molded into the core. As the motor 505 drives the toothed member 522, the extension members 524 and 526 work together via the pivot point 515 to raise or lower the regulator 530 and hence, the window glass 535. The window glass 535 is supported by the regulator 530 and the glass run channel.

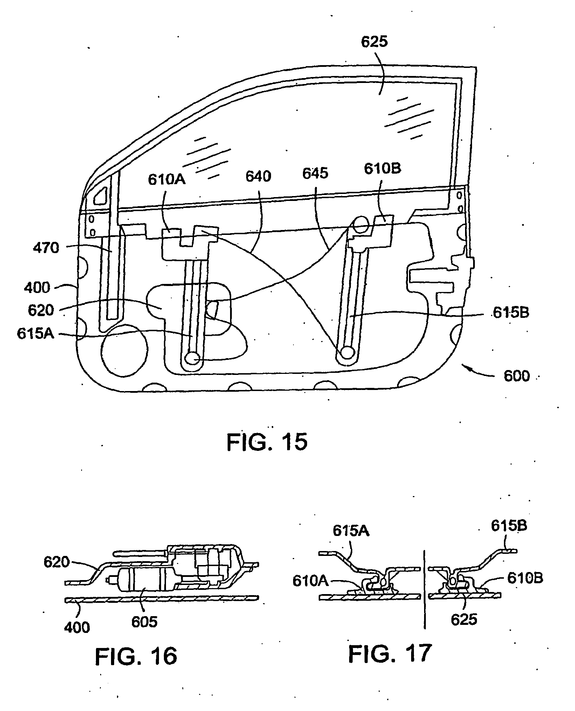

Figures 15, 16 and 17 show another embodiment of a window lift system 600. Figure 15 is a simplified schematic view of the core module 400 having the window lift system 600. The window lift system 600 includes two or more regulators (610A and 610B), each configured on a track member 615A, 615B. The window lift system 600 also includes an integrated motor housing or receptacle 620 that is injection molded on the core module 400. A motor 605 can be attached to the core module 400 as shown in Figure 16 either on the interior or exterior side of the core. Preferably, the motor 605 is assembled on the housing 620. The motor 605 can be easily mounted on or assembled to the integrally formed motor housing 620 using a clip snap connection, rivet, screw, adhesive, or by any other fastener (not shown).

The window 625 is secured to the regulators 610A, 610B by one or more fasteners and/or adhesive type material (not shown). The regulators 610A, 610B and the window tracks 615A, 615B can each be formed to have mating profiles that when engaged the regulator is guided along the profile of its respective track as shown in Figure 17.

The window lift system 600 further includes one or more Bowden cables (two are shown 640 and 645). The cables 640 and 645 are connected to the regulators 610A, 610B. The regulators 610A, 610B move the window 625 up or down when the motor 620 alternately draws the cables 640 and 645. The window 625 is supported by the regulators 610A, 610B in communication with the tracks 615A and 615B. These tracks can be integrally formed, insert molded onto the core module 400 or assembled onto the core module 400.

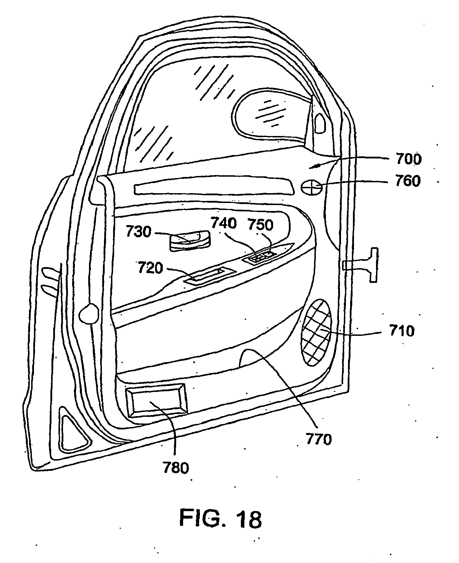

Considering the trim panel 700 in more detail, Figure 18 shows a schematic plan view of an illustrative trim panel 700. The trim panel 700 provides a housing or substrate for one or more electrical, mechanical and sealing components to be attached or integrally molded, or insert molded thereto. Illustrative components include, but are not limited to air bags, air vents, switches; door handles; door locks; arm rests; map pockets; speaker covers or grilles; speakers; beltline seals; plugs; grommets; and core to frame seals. Illustrative switches can be used for window glass control, window locks, outside mirror positioning controls, door locks, seat positioning controls, and stereo controls. As shown in Figure 18, the trim panel 700 can further include one or more speaker covers 710, arm rests 720, door handle 730, window switches 740, door lock switches 750, side mirror controls 760, map pockets 770, and interior lights 780.

Preferably, the trim panel 700 is injection molded from one or more materials, such as polypropylene or the one or more engineering resins. In one or more embodiments, the arm rest 720, speaker cover 710, and map pocket 770 are injection molded on the trim panel 700 using multi-material or multi-shot injection molding techniques.

In one or more embodiments, each of the door structure 300, core module 400, and trim panel 700 can include one or more seals, plugs, and/or grommets. Preferably, the one or more seals, plugs, and grommets are injection molded on the substrate or body (i.e., the door structure 300, core module 400, or trim panel 700). Preferably, any one or more of the seals, plugs, and grommets are directly molded on the door structure 300, core module 400, and/or trim panel 700 using two or three shot injection molding or robotic extrusion techniques. The integrated seals, plugs, and grommets help prevent or eliminate water seepage, rattles and vibration. Such components also increase the acoustical performance of the part (i.e., provide sound insulation and the "closing sound" of the door) while compensating for differences in part tolerance and expansion while allowing some movement.

### Materials

The components described, including the door structure 300, glass run channels 350 and 470, core module 400, reinforcement member 450, latch assembly 475, and trim panel 700, can be made from any material having the requisite properties, such as stiffness and strength for example. Suitable materials include, but are not limited to, propylene homopolymers, propylene copolymers, ethylene homopolymers, ethylene copolymers, and or any one or more of the following polymer resins:
a) polyamide resins such as nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 (N6/66/610), nylon MXD6 (MXD6), nylon 6T (N6T), nylon 6/6T copolymer, nylon 66/PP copolymer, nylon 66/PPS copolymer;
b) polyester resins such as polybutylene terephthalate (PBT), polyethylene terephthalate (PET), polyethylene isophthalate (PEI), PET/PEI copolymer, polyacrylate (PAR), polybutylene naphthalate (PBN), liquid crystal polyester, polyoxalkylene diimide diacid/polybutyrate terephthalate copolymer and other aromatic polyesters;
c) polynitrile resins such as polyacrylonitrile (PAN), polymethacrylonitrile, acrylonitrile-styrene copolymers (AS), methacrylonitrile-styrene copolymers, methacrylonitrile-styrene-butadiene copolymers; and acrylonitrile-butadienestyrene (ABS);
d) polymethacrylate resins such as polymethyl methacrylate and polyethylacrylate;
e) cellulose resins such as cellulose acetate and cellulose acetate butyrate;
f) fluorine resins such as polyvinylidene fluoride (PVDF), polyvinyl fluoride (PVF), polychlorofluoroethylene (PCTFE), and tetrafluoroethylene/ethylene copolymer (ETFE);
g) polyimide resins such as aromatic polyimides;
h) polysulfones;
i) polyacetals;
j) polyactones;
k) polyphenylene oxides and polyphenylene sulfides;
l) styrene-maleic anhydrides;
m) aromatic polyketones,
n) polycarbonates (PC);
o) elastomers such as ethylene-propylene rubber (EPR), ethylene propylene-diene monomer rubber (EPDM), styrenic block copolymers (SBC), polyisobutylene (PIB), butyl rubber, neoprene rubber, halobutyl rubber and the like); and
p) mixtures of any and all of a) through o) inclusive.

In one or more embodiments above or elsewhere herein, the material can include one or more fillers for added strength. Fillers can be present in an amount of from 0.001 wt% to 50 wt% in one embodiment based upon the weight of the composition and from 0.01 wt% to 25 wt% in another embodiment, and from 0.2 wt% to 10 wt% in yet another embodiment. Desirable fillers include but are not limited to titanium dioxide, silicon carbide, silica (and other oxides of silica, precipitated or not), antimony oxide, lead carbonate, zinc white, lithopone, zircon, corundum, spinel, apatite, Barytes powder, barium sulfate, magnesiter, carbon black, dolomite, calcium carbonate, sand, glass beads, mineral aggregates, talc, and hydrotalcite compounds of the ions Mg, Ca, or Zn with Al, Cr, or Fe and CO₃ and/or HPO₄, hydrated or not; quartz powder, hydrochloric magnesium carbonate, short glass fiber, long glass fiber, glass fibers, polyethylene terephthalate fibers, wollastonite, mica, carbon fiber, nanoclays, nanocomposites, magnesium hydroxide sulfate trihydrate, clays, alumina, and other metal oxides and carbonates, metal hydroxides, chrome, phosphorous and brominated flame retardants, antimony trioxide, silicone, and any combination and blends thereof. Other illustrative fillers can include one or more polypropylene fibers, polyamide fibers, para-aramide fibers (e.g., Kevlar or Twaron), meta-aramide fibers (e.g., Nomex), polyethylene fibers (e.g., Dyneema), and combinations thereof.

The material can also include a nanocomposite, which is a blend of polymer with one or more organo-clays. Illustrative organo-clays can include one or more of ammonium, primary alkylammonium, secondary alkylammonium, tertiary alkylammonium, quaternary alkylammonium, phosphonium derivatives of aliphatic, aromatic or arylaliphatic amines, phosphines or sulfides or sulfonium derivatives of aliphatic, aromatic or arylaliphatic amines, phosphines or sulfides. Further, the organo-clay can be selected from one or more of montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, vermiculite, halloysite, aluminate oxides, hydrotalcite, illite, rectorite, tarosovite, ledikite and/or florine mica.

When present, the organo-clay is preferably included in the nanocomposite at from 0.1 to 50 wt%, based on the total weight of the nanocomposite. The stabilization functionality may be selected from one or more of phenols, ketones, hindered amines, substituted phenols, substituted ketones, substituted hindered amines, and combinations thereof. The nanocomposite can further comprise at least one elastomeric ethylene-propylene copolymer, typically present in the nanocomposite at from 1 to 70 wt%, based on the total weight of the nanocomposite.

For areas, sections, or components of the door system 300 that need to provide structure, a reinforced polypropylene (PP) is preferred. Most preferred is a PP reinforced with a PET fiber or any other material that is light weight and provides a good balance of stiffness, impact strength, and has a low coefficient of linear thermal expansion (CLTE).

In one or more embodiments above or elsewhere herein, the polymer can be impact modified to provide improved impact resistance. Impact modifiers include, but are not limited to plastomers, ethylene propylene rubber (EPR), ethylene-propylene diene monomer rubber (EPDM), and may be used in combination with compatibilizers like, but not limited to maleated polypropylene, maleated polyethylene and other maleated polymers, hydroxilated polypropylene and other hydroxilated polymers, derivatives thereof, and any combination thereof.

In another embodiment, the material can contain a plastomer, preferably a propylene plastomer blend. The term "plastomer" as used herein refers to one or more polyolefin polymers and/or copolymers having a density of from 0.85 g/cm³ to 0.915 g/cm³ according to ASTM D-4703 Method B or ASTM D-1505, and a melt index (MI) between 0.10 dg/min and 30 dg/min according to ASTM D-1238 at 190°C, 2.1 kg). Preferred plastomers have a melt index (MI) of between 0.10 dg/min and 20 dg/min in one embodiment, and from 0.2 dg/min to 10 dg/min in another embodiment, and from 0.3 dg/min to 8 dg/min in yet another embodiment as measured by ASTM D-1238. Preferred plastomers can have an average molecular weight of from 10,000 to 800,000 in one embodiment, and from 20,000 to 700,000 in another embodiment. The molecular weight distribution (Mw/Mn) of desirable plastomers ranges from 1.5 to 5 in one embodiment, and from 2.0 to 4 in another embodiment. The 1% secant flexural modulus (ASTM D-790) of preferred plastomers range from 10 MPa to 150 MPa in one embodiment, and from 20 MPa to 100 MPa in another embodiment. Further, a preferred plastomer has a melting temperature (Tm) of from 30°C to 80°C (first melt peak) and from 50°C to 125°C (second melt peak) in one embodiment, and from 40°C to 70°C (first melt peak) and from 50°C to 100°C (second melt peak) in another embodiment.

In one or more embodiments above or elsewhere herein, the plastomer can be a copolymer of ethylene derived units and at least one of a C3 to C10 α-olefin derived units. Preferably, the copolymer has a density less than 0.915 g/cm³. The amount of comonomer (C3 to C10 α-olefin derived units) present in the plastomer ranges from 2 wt% to 35 wt% in one embodiment, and from 5 wt% to 30 wt% in another embodiment, and from 15 wt% to 25 wt% in yet another embodiment, and from 20 wt% to 30 wt% in yet another embodiment.

In one or more embodiments above or elsewhere herein, the plastomer can be one or more metallocene catalyzed copolymers of ethylene derived units and higher α-olefin derived units, such as propylene, 1-butene, 1-hexene and 1-octene. Preferably, the plastomer contains enough of one or more of those comonomer units to yield a density between 0.860 g/cm³ and 0.900 g/cm³. Examples of commercially available plastomers include: EXACT 4150, a copolymer of ethylene and 1-hexene, the 1-hexene derived units making up from 18 wt% to 22 wt% of the plastomer and having a density of 0.895 g/cm³ and MI of 3.5 dg/min (available from ExxonMobil Chemical Company); and EXACT 8201, a copolymer of ethylene and 1-octene, the 1-octene derived units making up from 26 wt% to 30 wt% of the plastomer, and having a density of 0.882 g/cm³ and MI of 1.0 dg/min (available from ExxonMobil Chemical Company).

Preferred blends for use as the molded material herein typically include of from about 15%, 20% or 25% to about 80%, 90% or 100% polymer by weight; optionally of from about 0%, 5%, or 10% to about 35%, 40%, or 50% filler by weight, and optionally of from about 0%, 5%, or 10% to about 35%, 40%, or 50% plastomer by weight. In one or more embodiments, a preferred blend contains one or more polymers described in an amount ranging from a low of about 15%, 20% or 25% to a high of about 80%, 90% or 100% polymer by weight. In one or more embodiments, a preferred blend contains at least about 1%, 5%, 10%, 15%, or 20% plastomer by weight. In one or more embodiments, a preferred blend contains at least about 1%, 5%, 10%, 15%, or 20% filler by weight.

Preferably, blends for use herein will have a tensile strength of at least 6,500 MPa, at least 7,500 MPa, or at least 9,000 MPa. Further, preferred blends will have a flexural modulus of 1,750 MPa or more, such as about 1,800 MPa or more, or more than about 2,000 MPa.

In addition to the materials and polymers described above, one or more thermoplastic vulcanizates (TPV), thermoplastic elastomer (TPE), thermoplastic olefin (TPO), polyurethanes (PU), or elastomers such as EPR or EPDM can be used for areas or components that need to have sealing properties. Those material can be used in dense (non-foamed) or in foamed state. Most preferably, a TPV is selected due to the inherent mechanical properties that provide excellent sealing capability and the ability to be injection molded. The other aspect of materials will be the compatibalization of the structural and sealing materials, or the ability to adhere to each other. The materials of either the structural and/or sealing systems can be functionalized or have a secondary additive or component added to the material to provided good bondability.

### Assembly Sequence

Referring back to Figure 3, the door system can be easily assembled. In at least one specific embodiment, the door system can be assembled according to the following sequence. First, components are inserted into an injection mold for making the core module 400. The core module 400 and the inserted components are injection molded with a first material. A second material, such as TPV, can be injection molded to create the flexible components (seals, plugs, grommets, or soft touch portions of the skin) on the core module 400. Gas or water assist can also be used to create hollow profiles where needed for additional structure strength. Foaming agents can be used to create foam structures to minimize sink marks or to create a foam structure for increased stiffness. The core module 400 having the integrated components formed thereon is ejected from the tool. The parts that have not yet been integrated to the core module are then assembled. The window glass 535 is assembled to the core module 400 and properly adjusted. The core module 400 is now ready for delivery to the assembly line.

At the assembly line, the core module 400 is attached to the door structure 300, and the trim panel 700 is attached to the door assembly and all connections between the core and the door structure (mechanical, electrical or other). Alternatively, the trim panel 700 can be attached to the core module 400 which is then attached to the door structure 300. The door assembly is then ready to be assembled to the vehicle.

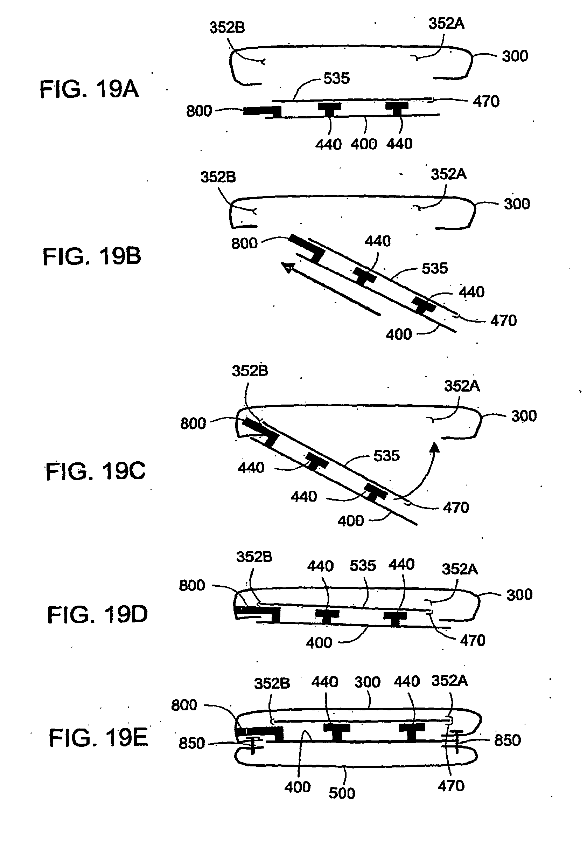

Figures 19A-19E show a simplified, schematic illustration of one particular sequence for assembling the door assembly. Referring to Figure 19A, the core module 400 includes one or more window tracks 440 (two are shown), glass run channel 470, lock system 800 and window glass 535. The window glass 535 is shown in contact or communication with the one or more window tracks 440 and the glass run channel 470. The assembled core module 400 is inserted into the door structure 300, preferably at an angle, as shown in Figure 19B. The lock mechanism 800 is preferably inserted into the door structure 300 until the window glass 535 contacts the U-shaped profile of the lower portion 352B of the glass run channel of the door structure 300. Any mechanical and/or electrical connections can then be made if they have not already been made. With a first edge of the window glass 535 still in contact with the U-shaped profile 352B of the glass run channel, the core module 400 can be rotated toward the door structure 300 until the second edge of the window glass contacts the L-shaped profile 352A of the glass run channel as depicted in Figure 19C and Figure 19D.

After the core module 400 is closed and attached to the door structure 300, one or more fastening members including one or more screws, bolts, rivets, clips, etc., can then be used to affix the core module 400 to the door structure 300. The trim panel 700 can then be placed adjacent to the core module 400 and fastened into place using one or more screws, bolts, rivets, clips, or other fastening members 850, as shown in Figure 19E.

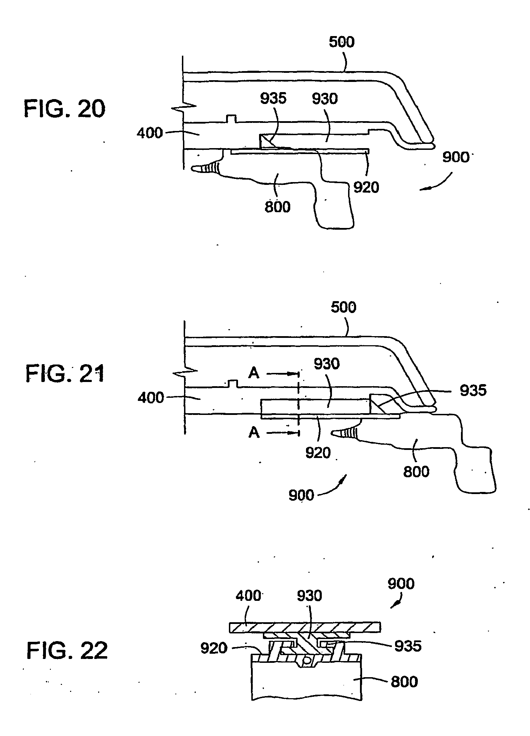

Figures 20, 21 and 22 show illustrative partial cross sectional views of one embodiment of door assembly utilizing a sliding lock assembly 900 to facilitate assembly. The sliding lock assembly 900 allows the lock to be in a first ("retracted") position during transport and mounting of the core module 400 to the door structure 300. Then, the lock assembly 900 can be actuated or moved into a second ("assembled") position.

Figure 20 shows an illustrative side view of the sliding lock assembly 900 in a pre-assembled or retracted position. Figure 21 shows an illustrative side view of the sliding lock assembly 900 in the assembled position. Figure 22 is a partial cross section along lines A-A of Figure 21.

Referring to Figure 20, the locking mechanism 800 is connected or otherwise affixed to a sliding mechanism 920 (i.e., sled or slider) which allows the lock mechanism 800 to move during the assembly of the core module 400 to the door structure 300. Preferably, the sliding mechanism 920 is adapted to move laterally within a single plane although it is envisioned that the sliding mechanism 920 can be adapted to move laterally in two horizontal planes, e.g., along an X-axis and along a Y-axis. At least a portion of the lock mechanism 800 can be attached to the sliding mechanism 920 by being adhered, welded, screwed, bolted, riveted, clipped, or otherwise attached using any known technique. The sliding mechanism 920 can also be an integral part of the lock mechanism 800, if desired.

As shown in Figure 21, the core module 400 can include a rail or track system 930 attached or integrally formed on at least a portion of the outer surface thereof. The sliding mechanism 920 can also include a track or rail system 935 that has a mating profile to engage the profile of the track system 930 of the core module 400. Referring to Figure 22, the lock mechanism 800 can be moved from a first position or "retracted position" to a second or "assembled position" after the core module 400 is attached to the door structure 300.

In one or more embodiments, a tool can be used to move the lock mechanism 800 from the first position to the second. For example, a tool can be inserted through the hole where the lock mechanism 800 would contact the door structure 300. The tool could be adapted to engage the lock mechanism 800 and used to manipulate (i.e., pull) the lock mechanism 800 into the second or assembled position where the lock mechanism 800 can be mounted to the door structure 300.

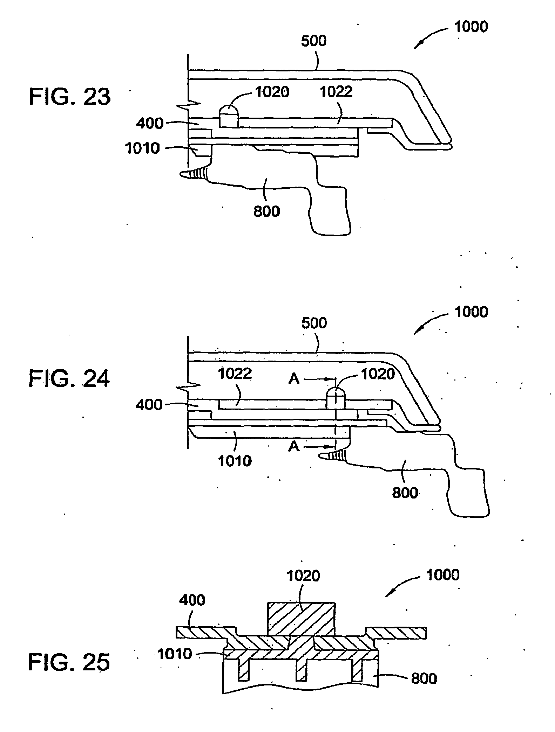

Figures 23, 24 and 25 show illustrative side views of another embodiment of a door assembly utilizing a sliding lock assembly 1000. More particularly, Figure 23 shows a schematic side view of the sliding lock assembly 1000 in a first or pre-assembled position. Figure 24 shows a schematic side view of the sliding lock assembly 1000 in an assembled or second position. Figure 25 is a partial cross section along lines A-A of Figure 24.

The sliding lock assembly 1000 includes a sliding mechanism 1010 in communication with a handle or lever 1020 for manipulating the lock mechanism 800. The sliding mechanism 1010 and the handle 1020 can be injection molded within a portion of the core module 400. Preferably, the handle 1020 is formed within a recess 1022 formed in an upper surface of the core module 400 as shown in Figures 23 and 24. The handle 1020 can be injection molded as one piece with the sliding mechanism 1010 as shown in cross section in Figure 25. Preferably, the sliding mechanism 1010 is connected to the lock mechanism 800 using one or more legs or anchors 1010A (three are shown) at least partially disposed within the lock mechanism 800 as shown in Figure 25.

The operation of the lock assembly 1000 is similar to that described above with reference to Figures 20-22 except that the handle 1020 can be used to manipulate the sliding mechanism 1010 and hence the lock mechanism 800. Of course, a tool could also be used, if needed, to help move the sliding mechanism 1010 from the first position to the second position.

As noted above, the degree of integration described can dramatically reduce the cost and assembly complexity of the finished door. Logistical costs, for example, are also significantly reduced, which reduces the amount of assembly errors in addition to the overall cost. Functional testing costs after final assembly are also reduced or eliminated because a majority of the functionality can be tested prior to final assembly (i.e., pre-tested). Further, the use of plastic materials in the door assembly can provide lower overall weight, more part integration, improved noise insulation, greater design freedom and will enable cheaper design modifications (i.e., using replaceable inserts in an injection molding tool).

The multi-material injection molding techniques described can also provide a unique combination of materials. Further, the number of secondary attachment techniques needed for multiple components such as rivets, screws, adhesives, clips, snaps, etc., is greatly reduced, if not eliminated all together in some instances.

One of ordinary skill in the art will recognize that the door system described can be utilized as a complete system, or the individual components thereof can be utilized separately as individual mini-systems or modular type units to help consolidate two or more components if desired.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim is not defined above, it should be given the broadest definition persons in the pertinent art have given that term as reflected in at least one printed publication or issued patent.

While the foregoing is directed to embodiments of the present invention, other and further embodiments of the invention may be devised without departing from the basic scope thereof, and the scope thereof is determined by the claims that follow.

## Claims

1. A door core module (400), comprising:
a body having a first and second side; ; and
a glass run channel (470) disposed on the second side of the body, the glass run channel having an open profile,
wherein the body includes one or more components disposed thereon,
**characterized by** a reinforcement member (450) disposed on the first side of the body.

2. The core module of claim 1, wherein the one or more components are injection molded on the body.

3. The core module of claim 1 or 2, wherein the body comprises one or more seals disposed thereon.

4. The core module of claim 3, wherein the one or more seals are injection molded on the body.

5. The core module of any of the above claims 1 to 4, wherein the reinforcement member comprises a first flange and a second flange, each adapted to contact the first side of the body.

6. The core module of any of the above claims 1 to 5, wherein the reinforcement member comprises a first flange, a second flange and a recessed portion between the flanges.

7. The core module of claim 6, wherein the reinforcement member further comprises an insert disposed therein, the insert comprising one or more stiffening members.

8. The core module of claim 7, wherein the reinforcement member further comprises a cover plate disposed thereon to define a hollow cavity between the reinforcement member and the cover plate.

9. The core module of claim 4, 5, 6, 7, 8, or 9 wherein the one or more components are integrally formed on the body.

10. The core module of any of the above claims 1 to 9, wherein the body comprises polypropylene.

11. The core module of any of the above claims 1 to 10, wherein the body is injection molded from polypropylene.

12. The core module of any of the above claims 1 to 11, wherein the body comprises one or more engineering resins.

13. The core module of any of the above claims 1 to 12, wherein the body is injection molded from one or more engineering resins.

14. A door system, comprising:
an outer panel;
a core module (400) according to claim 1; and
a trim panel adapted to cover the core module.

15. A method for assembling a door system according to claim 14, comprising: providing at least one outer panel, at least one core module (400), and at least one trim panel; disposing a reinforcement member (450) on an interior side of the core module (400); disposing a glass run channel (470) on an exterior side of the core module; disposing a glass run channel on the outer panel; disposing a window glass (460) on the core module; disposing the core module on the outer panel; and then disposing the trim panel.

## Patentansprüche

1. Türkernmodul (400), das einen Körper mit einer ersten und einer zweiten Seite und eine Glaslaufführung (470) umfasst, die an der zweiten Seite des Körpers angebracht ist, wobei die Glaslaufführung ein offenes Profil hat, wobei der Körper ein oder mehrere Bauteile umfasst, die daran angebracht sind, **dadurch gekennzeichnet, dass** an der ersten Seite des Körpers ein Verstärkungselement (450) angebracht ist.

2. Kernmodul nach Anspruch 1, wobei das eine oder die mehreren Bauteile an den Körper spritzgegossen sind.

3. Kernmodul nach Anspruch 1 oder 2, wobei der Körper eine oder mehrere Dichtungen umfasst, die daran angebracht sind.

4. Kernmodul nach Anspruch 3, wobei die eine oder die mehreren Dichtungen an den Körper spritzgegossen sind.

5. Kernmodul nach einem der Ansprüche 1 bis 4, wobei das Verstärkungselement einen ersten Flansch und einen zweiten Flansch umfasst, wobei jeder derart angepasst ist, dass er die erste Seite des Körpers berührt.

6. Kernmodul nach einem der Ansprüche 1 bis 5, wobei das Verstärkungselement einen ersten Flansch, einen zweiten Flansch und einen vertieften Abschnitt zwischen den Flanschen umfasst.

7. Kernmodul nach Anspruch 6, wobei das Verstärkungselement ferner einen Einsatz umfasst, der darin angebracht ist, wobei der Einsatz ein oder mehrere Versteifungselemente umfasst.

8. Kernmodul nach Anspruch 7, wobei das Verstärkungselement ferner eine Abdeckplatte umfasst, die daran angebracht ist, um zwischen dem Verstärkungselement und der Abdeckplatte einen Hohlraum zu definieren.

9. Kernmodul nach Anspruch 4, 5, 6, 7, 8 oder 9, wobei das eine oder die mehreren Bauteile integral an den Körper angeformt sind.

10. Kernmodul nach einem der Ansprüche 1 bis 9, wobei der Körper Polypropylen umfasst.

11. Kernmodul nach einem der Ansprüche 1 bis 10, wobei der Körper aus Polypropylen spritzgegossen ist.

12. Kernmodul nach einem der Ansprüche 1 bis 11, wobei der Körper ein oder mehrere technische Harze umfasst.

13. Kernmodul nach einem der Ansprüche 1 bis 12, wobei der Körper aus einem oder mehreren technischen Harzen spritzgegossen ist.

14. Türsystem, das eine Außenplatte, ein Kernmodul (400) gemäß Anspruch 1 und eine Verkleidung umfasst, die derart angepasst ist, dass sie das Kernmodul abdeckt.

15. Verfahren zum Montieren eines Türsystems gemäß Anspruch 14, bei dem mindestens eine Außenplatte, mindestens ein Kernmodul (400) und mindestens eine Verkleidung bereitgestellt werden, ein Verstärkungselement (450) auf einer Innenseite des Kernmoduls (400) angebracht wird, eine Glaslaufführung (470) an einer Außenseite des Kernmoduls angebracht wird, eine Glaslaufführung an der Außenplatte angebracht wird, ein Fensterglas (460) an dem Kernmodul angebracht wird, das Kernmodul an der Außenplatte angebracht wird und dann die Verkleidung angebracht wird.

## Revendications

1. Module central de porte (400), comprenant:
un corps présentant un premier côté et un deuxième côté; et
un canal de déplacement de vitre (470) disposé sur le deuxième côté du corps, le canal de déplacement de vitre présentant un profil ouvert;
le corps comprenant un ou plusieurs composant(s) disposé(s) sur celui-ci;
**caractérisé par**:
un élément de renforcement (450) disposé sur le premier côté du corps.

2. Module central selon la revendication 1, dans lequel ledit/lesdits un ou plusieurs composant(s) est (sont) moulé(s) par injection sur le corps.

3. Module central selon la revendication 1 ou 2, dans lequel le corps comprend un ou plusieurs joint(s) d'étanchéité disposé(s) sur celui-ci.

4. Module central selon la revendication 3, dans lequel le ou les joint(s) est (sont) moulé(s) par injection sur le corps.

5. Module central selon l'une quelconque des revendications précédentes 1 à 4, dans lequel l'élément de renforcement comprend une première bride et une deuxième bride qui sont chacune adaptées pour entrer en contact avec le premier côté du corps.

6. Module central selon l'une quelconque des revendications précédentes 1 à 5, dans lequel l'élément de renforcement comprend une première bride, une deuxième bride et une partie évidée entre les brides.

7. Module central selon la revendication 6, dans lequel l'élément de renforcement comprend en outre un insert disposé dans celui-ci, l'insert comprenant un ou plusieurs élément(s) de raidissement.

8. Module central selon la revendication 7, dans lequel l'élément de renforcement comprend en outre une plaque de recouvrement disposée sur celui-ci pour définir une cavité creuse entre l'élément de renforcement et la plaque de recouvrement.

9. Module central selon la revendication 4, 5, 6, 7, 8 ou 9, dans lequel ledit/lesdits un ou plusieurs composant(s) est (sont) intégralement formé(s) sur le corps.

10. Module central selon l'une quelconque des revendications précédentes 1 à 9, dans lequel le corps contient du polypropylène.

11. Module central selon l'une quelconque des revendications précédentes 1 à 10, dans lequel le corps est moulé par injection à partir de polypropylène.

12. Module central selon l'une quelconque des revendications précédentes 1 à 11, dans lequel le corps contient une ou plusieurs résine(s) industrielle(s).

13. Module central selon l'une quelconque des revendications précédentes 1 à 12, dans lequel le corps est moulé par injection à partir d'une ou de plusieurs résine(s) industrielle(s).

14. Système de porte, comprenant:
un panneau extérieur;
un module central (400) selon la revendication 1; et
un panneau de garniture adapté pour couvrir le module central.

15. Procédé d'assemblage d'un système de porte selon la revendication 14, comprenant les étapes suivantes:
fournir au moins un panneau extérieur, au moins un module central (400) et au moins un panneau de garniture;
disposer un élément de renforcement (450) sur un côté intérieur du module central (400);
disposer un canal de déplacement de vitre (470) sur un côté extérieur du module central;
disposer un canal de déplacement de vitre sur le panneau extérieur;
disposer une vitre de fenêtre (460) sur le module central;
disposer le module central sur le panneau extérieur; et ensuite
disposer le panneau de garniture.
